# EUROPÄISCHE PATENTANMELDUNG

(11) **EP 0 730 823 A1**
(43) Veröffentlichungstag der Anmeldung: **11.09.1996**
(21) Anmeldenummer: 96103232.3
(22) Anmeldetag: 02.03.1996
(51) Int. Cl.: A01G 27/04

(54) **Einrichtung zum Halten von Zierpflanzen**

(30) Priorität: 07.03.1995 CH 649/95; 07.03.1995 CH 651/95
(71) Anmelder: Schoch, Hans, 5040 Schöftland (CH)
(72) Erfinder: Schoch, Hans, 5040 Schöftland (CH)
(74) Vertreter: Fillinger, Peter, Dr.

(57) **Zusammenfassung**

Die Einrichtung weist ein Gefäss und eine in das Gefäss (1) einsetzbare Trennwand (4) auf, die dessen Innenraum in eine obere Kammer (5) zur Aufnahme eines Substrates und in eine an den Gefässboden angrenzende untere Kammer (6) für die Aufnahme eines Wasservorrates unterteilt und ein Eindringen des Substrats in die untere Kammer (6) verhindert. Ein prismatischer Körper (2), der zumindest in seinem Oberflächenbereich einen porösen, von unten nach oben reichenden, und mindestens einen Teil des Umfanges überdeckenden Abschnitt mit Kapillarwirkung aufweist, erstreckt sich vom Bodenbereich der unteren Kammer (6) durch die Trennwand (4) hindurch in die obere Kammer (5), wobei in der unteren Kammer (6) ein Schwimmer (8) vorhanden ist, der mit seinem oberen Ende (10), wenn die untere Kammer (6) mit Wasser gefüllt ist, bis mindestens zum oberen Rand des Gefässes (1) reicht.

## Beschreibung

Die vorliegende Erfindung bezieht sich auf eine Einrichtung nach dem Oberbegriff des Anspruchs 1.

Zum Halten von Zierpflanzen ist eine Einrichtung bestehend aus einer Pflanzenschale gefüllt mit porösem Tongranulat bekannt. Eine Zierpflanze wird mit einem ihre Wurzel umgebenden Erdballen in die Pflanzenschale von wesentlich grösserem Volumen als der Erdballen gesetzt und dabei das den Erdballen umgebende Restvolumen der Schale mit dem porösen Tongranulat ausgefüllt. Das Verhältnis der Volumina Erdballen/Tongranulat beträgt in grober Näherung 1:2. Während und nach dem Begiessen der eingetopften Pflanze wird das sich in den Zwischenräumen zwischen den Granulatkörnern verteilende Giesswasser vom Tongranulat rasch absorbiert. Durch Diffusion und/oder Kapillarwirkung verteilt es sich rasch über die ganze Granulatfüllung und wird von dieser allmählich an den Erdballen abgegeben. Das vom Granulat absorbierte und das freie Wasser werden mittels eines sich über die Höhe der Topffüllung erstreckenden Vliespapierstreifens detektiert und dessen Wassergehalt mit einem Farbindikator angezeigt. Bei dieser bekannten Einrichtung altert das Vliespapier rasch und verändert damit seine Wasseraufnahmefähigkeit und die Anzeige der noch vorhandenen Wassermenge. Ein der Pflanze förderliches Begiessen wird damit unmöglich.

Die vorliegende Erfindung stellt sich die Aufgabe, einen Bausatz zu schaffen, der den genannten Nachteil vermeidet.

Erfindungsgemäss wird diese Aufgabe gelöst durch die kennzeichnenden Merkmale des Anspruchs 1.

Die beiliegende schematische Zeichnung zeigt anhand von fünf Querschnittfiguren fünf Ausführungsbeispiele der Erfindung.

Die Erfindung hat den Vorteil, dass sie in Verbindung mit allen marktgängigen Gefässen verwendbar ist. Bei der Ausführungsform nach den Ansprüchen 8 und 9 ergibt sich zudem, dass eine Fehlanzeige des Wasserstandanzeigers und damit eine ungenügende Bewässerung vermieden wird.

Die Hinweisziffer 1 bezeichnet eine wasserdichte Schale einer Einrichtung zum Halten und Pflegen einer Zierpflanze. Die Einrichtung weist weiter einen zylindrischen oder prismatischen Körper 2, einen Wasserstandanzeiger 3 sowie eine Trennwand 4 auf, die das Innere der Schale 1 in eine obere Kammer 5 und in eine an den Gefässboden angrenzende untere Kammer 6 unterteilt. Die obere Kammer 5 dient der Aufnahme eines Substrats wie Erde oder Erdersatz. Nebst Erde sind als Substrat geeignet Tongranulat, Perlit und dgl. Materialien mit Kapillarwirkung. Die untere Kammer 6 bildet ein Wasserreservoir.

Die Schale 1 kann aus Kunststoff, Glas, Keramik oder dgl. sein. Der Körper 2 ist rohrförmig und vorzugsweise aus einem porösen Material mit Kapillarwirkung wie Ton, der Wasser aufsaugt und in dem sich das Wasser in Folge der Kapillarwirkung über die ganze Länge ausbreitet. Es genügt aber auch, wenn nur die Oberfläche des Körpers 2 diese Eigenschaften aufweist und der Kern des Körpers 2 nicht saugfähig ist. Es ist dabei nicht notwendig, dass die Körperoberfläche über ihren ganzen Umfang porös ist. Es genügt, wenn ein sich längsparallel von unten nach oben erstreckender Oberflächenstreifen porös und wassertransportierend ist. Folglich kann der Körper 2 auch aus einem tragenden nicht porösen Kern bestehen, der aussenseitig eine poröse Oberflächenschicht trägt.

Der Körper 2 steht auf dem Boden der Schale 1. Er reicht bis zu ihrem oberen Randbereich und durchdringt die Trennwand 4. Dadurch steht seine Oberfläche in der unteren Kammer 6 in Berührung mit dem Vorratswasser und in der oberen Kammer 5 in Berührung mit dem Substrat. Befindet sich Wasser in der unteren Kammer 6, wird dieses vom Körper 2 aufgesaugt, nach oben transportiert und dort an das Substrat abgegeben. Für den Wassertransport des Körpers 2 ist es vorteilhaft, wenn seine poröse Oberfläche im Bereich der Trennwand 4 manschettenförmig mit einem wasserundurchlässigen Farb- oder Lackband 11 umgeben ist, so dass der Körper in diesem Bereich kein Wasser aufsaugen kann.

Zur Vermeidung einer Überfüllung der unteren Kammer 6 mit Wasser ist achsial in den Körper 2 der Wasserstandanzeiger 3 geschoben, der ein Schutzgehäuse 7 aufweist und dessen oberes Ende 12 als durchsichtiges Röhrchen gestaltet ist, das mit einer auf den Füllstand hinweisenden Skala versehen sein kann. Achsial verschiebbar ist im Schutzgehäuse 7 ein Schwimmer 8 gelagert, der aus einer schwimmfähigen Hohlkugel 9 und einem darauf mit einer Fussplatte stehenden Zeigerstab 10 besteht.

Die Trennwand 4 kann teilweise oder ganz aus einem wasserdurchlässigen oder wasserundurchlässigen Material wie beispielsweise Kunststoff bestehen. In jedem Fall aber hat die Trennwand 4 zu verhindern, dass das Substrat aus der oberen Kammer 5 in die untere (6) gelangen kann.

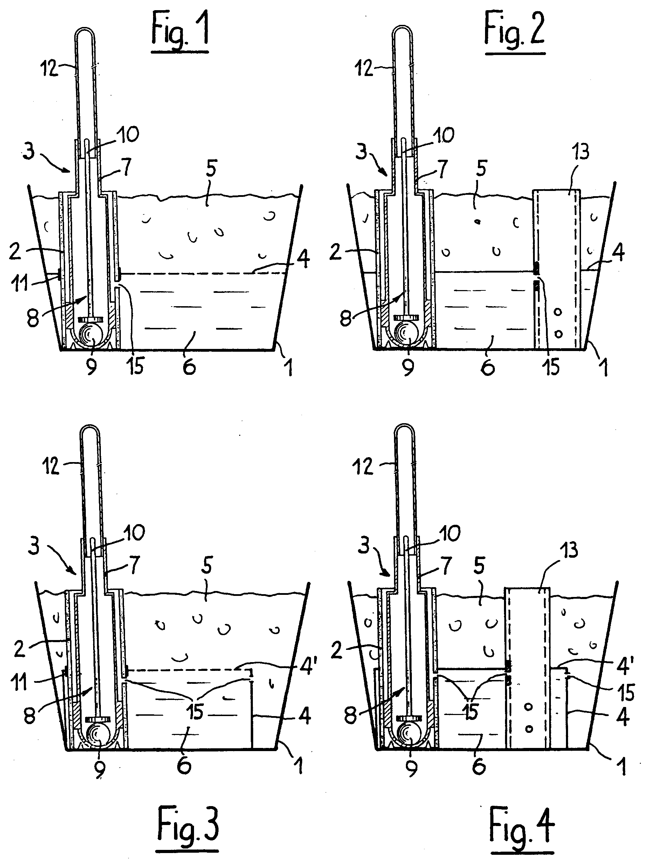

Im Beispiel nach Fig. 1 ist die Trennwand 4 wasserdurchlässig. Der auf dem Boden des Gefässes 1 stehende poröse Tonkörper 2 durchdringt die Trennwand 4 durch eine entsprechende Öffnung und ragt in die obere, mit dem Substrat gefüllte Kammer 5 ein. Der Wasserstandanzeiger 3 ist achsial in den rohrförmigen Körper 2 eingeschoben und überragt den oberen Rand des Gefässes 1. Die nicht dargestellte Pflanze ist mit ihrer Wurzel in das Substrat, das heisst in die obere Kammer 5 eingepflanzt. Zum Befeuchten des Substrates wird das Wasser wie bei Topfpflanzen üblich in das Substrat gegossen, wobei es nach unten in die Kammer 6 abfliesst und diese allmählich auffüllt. Der Schwimmer 8 folgt dem Wasserfüllstand und zeigt am Glasrohr 12 ersichtlich, wenn der Wasserpegel die Trennwand 4 erreicht. Der Körper 2 saugt nun in der unteren Kammer 6 Wasser auf, transportiert es nach oben und gibt es dort an das Substrat ab, wobei sich der Schwimmer 8 allmählich absenkt und ein Nachfüllen signalisiert, wenn die untere Kammer leer ist. Damit wird ein Übernässen des Substrates vermieden und trotzdem das Intervall zwischen dem Begiessen der Pflanze auf mehrere Wochen ausgedehnt.

Das Beispiel nach Fig. 2 ist im Prinzip gleich ausgebildet. Der Unterschied zu jene nach Fig. 1 besteht darin, dass die Trennwand 4 wasserundurchlässig ist und das Begiessen der Pflanze nicht durch das Substrat sondern nur durch ein Wasserzugaberohr 13 erfolgen kann.

Dem Beispiel nach Fig. 3 entspricht das Beispiel nach Fig. 1 mit dem Unterschied, dass die Trennwand 4 die Form einer nach oben geschlossenen Dose hat, deren Oberseite 4' für Wasser durchlässig aber undurchlässig für das Substrat ist und bei der Boden und Seitenwand wasserundurchlässig sind.

Bei diesem Ausführungsbeispiel kann das Begiessen der Pflanze ebenfalls durch das Substrat erfolgen, wobei sich das Wasser in der Dose 4 sammelt und der Schwimmer 8 den Füllstand anzeigt.

Das Beispiel nach Fig. 4 ist eine Kombination der Beispiele nach Fig. 2 und 3. Im Unterschied zu Fig. 3 ist die Abdeckung 4' der Dose 4 wasserundurchlässig, so dass ein die obere Abdeckung 4' durchdringendes Wassereinfüllrohr 13 vorhanden ist, das mindestens bis zum oberen Rand des Gefässes 1 erreicht und durch das die Dose 4 mit dem Wasser auffüllbar ist.

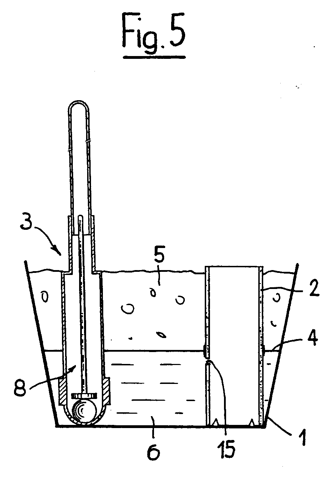

Sind der rohrförmige Körper 2 und der Wasserstandanzeiger 3 getrennt (Fig. 5), stehen beide lotrecht auf dem Gefässboden und durchstossen die Trennwand 4. Dabei kann der Körper 2 als Wasserzugaberohr dienen, wenn die Trennwand 4 wasserdicht ist. Ist sie wasserdurchlässig, kann das Wasser auch durch das Substrat hindurch in die Schale 1 gegossen werden. Ist die Trennwand 4 wasserdurchlässig, kann der Körper 2 ein Vollkörper aus saugfähigem und wassertransportierendem Material wie Ton sein.

Um den Schwimmer 8 während des Begiessens der Pflanze verzugsfrei dem Wasserstand in der unteren Kammer 6 folgen zu lassen, ist diese im Bereich ihres oberen Endes zu belüften. Dies kann durch eine Belüftungsöffnung 15 in der Wand des Körpers 2 (Fig. 1) oder in der Wand des Wasserzugaberohres 13 (Fig. 2) oder im vertikalen Abschnitt der Dosenwand 4 (Fig. 3) oder an mehreren dieser Stellen erfolgen. Damit wird die Bildung eines Luftkissens, das während des Giessens unkontrolliert entstehen und abbauen kann, vermieden. Ohne eine Belüftung der Kammer 6 besteht die Gefahr, dass der Schwimmer 8 dem Begiessen der Pflanze einen falschen Wasserstand signalisiert, so dass dieser eine ungenügende Wassermenge zugemessen wird.

Durch eine zweckmässige Materialwahl bei der Herstellung des Körpers 2 und/oder durch eine chemische Behandlung kann seine Porosität und/oder die Benetzbarkeit seiner aktiven Oberfläche für Wasser und damit seine Förderleistung für das Wasser beeinflusst werden. Es ist damit möglich für bestimmte Pflanzen Körper 2 mit bestimmter Förderleistung herzustellen, so dass deren Substrat dauernd optimal befeuchtet wird.

## Patentansprüche

1. Einrichtung zum Halten einer Pflanze mit einem ein Substrat wie Erde oder Erdersatz aufnehmenden Gefäss, dadurch gekennzeichnet, dass eine in das Gefäss (1) einsetzbare Trennwand (4) vorhanden ist, die den Innenraum des Gefässes (1) in eine obere Kammer (5) zur Aufnahme des Substrates und in eine an den Gefässboden angrenzende untere Kammer (6) für die Aufnahme eines Wasservorrates unterteilt und ein Eindringen des Substrats in die untere Kammer (6) verhindert, dass ein zylindrischer oder prismatischer Körper (2), der zumindest in seinem Oberflächenbereich einen porösen, von unten nach oben reichenden, und mindestens einen Teil des Umfanges überdeckenden Abschnitt mit Kapillarwirkung aufweist vom Bodenbereich der unteren Kammer (6) durch die Trennwand (4) hindurch in die obere Kammer (5) hineinragt, wobei in der unteren Kammer (6) ein Schwimmer (8) vorhanden ist, der mit seinem oberen Ende (10), wenn die untere Kammer (6) mit Wasser gefüllt ist, bis mindestens zum oberen Rand des Gefässes (1) reicht.

2. Einrichtung nach Anspruch 1, dadurch gekennzeichnet, dass der zylindrische oder prismatische Körper (2) und sein Oberflächenbereich aus gleichem oder unterschiedlichem Material bestehen, und dass gegebenenfalls der Oberflächenbereich und der prismatische Körper (2) einstückig, vorzugsweise aus Ton gefertigt sind.

3. Einrichtung nach Anspruch 1 oder 2, dadurch gekennzeichnet, dass der zylindrische oder prismatische Körper (2) ein Voll- oder Hohlprofil aufweist.

4. Einrichtung nach einem der Ansprüche 1 bis 3, dadurch gekennzeichnet, dass die Trennwand (4) mindestens teilweise wasserdurchlässig oder wasserundurchlässig ist.

5. Einrichtung nach Anspruch 4, dadurch gekennzeichnet, dass die Trennwand (4) eine wasseraufnehmende Dose mit einer wasserdurchlässigen Abdeckung (4') bildet.

6. Einrichtung nach einem der Ansprüche 1 bis 5, dadurch gekennzeichnet, dass der Körper (2) ein Hohlprofil aufweist, und dass ein Wasserstandanzeiger (3) mit einem unten offenen Schutzgehäuse (7) achsial in den Körper (2) einschiebbar ist, wobei im Schutzgehäuse (7) der Schwimmer (8) achsial beweglich angeordnet ist.

7. Einrichtung nach einem der Ansprüche 1 bis 6, dadurch gekennzeichnet, dass ein parallel zum zylindrischen oder prismatischen Körper (2) anzuordnendes Wasserzugaberohr (13) vorhanden ist, welches sich vom oberen Rand des Gefässes (1) durch die Trennwand (4) hindurch in die untere Kammer (6) erstreckt.

8. Einrichtung nach einem der Ansprüche 1 bis 7, dadurch gekennzeichnet, dass Mittel (15) vorhanden sind, um die Kammer (6) zu belüften.

9. Einrichtung nach Anspruch 7 und 8, dadurch gekennzeichnet, dass die Mittel (15) eine im Körper (2) und/oder in einem vertikalen Abschnitt der Trennwand (4) und/oder im Wasserzugaberohr (13) angeordnete Belüftungsöffnung sind.

10. Einrichtung zum Halten von Pflanzen in einer Schale (1), die durch eine Trenneinrichtung (4) in eine Wasservorratskammer (6) und eine Substratkammer (5) unterteilt ist, mit einem die beiden Kammern (5, 6) verbindenen Körper (2), der das Wasser aus der Wasservorratskammer (6) in die Substratkammer (5) transportiert, dadurch gekennzeichnet, dass der Körper (2) ein starrer, selbsttragender Körper ist, dessen mit ihm einstückig gefertigte Oberflächenzone wenigstens einen sich über seine Länge erstreckenden Streifen mit einer porös kapillaren Struktur aufweist.

11. Einrichtung nach Anspruch 10, dadurch gekennzeichnet, dass der Körper (2) aus Ton besteht.

12. Einrichtung nach Anspruch 10 oder 11, dadurch gekennzeichnet, dass der Körper (2) eine zylindrische oder prismatische Form aufweist.

13. Einrichtung nach einem der Ansprüche 10 bis 12, dadurch gekennzeichnet, dass der Körper (2) ein Hohl- oder Vollprofil aufweist.

14. Einrichtung nach einem der Ansprüche 10 bis 13, dadurch gekennzeichnet, dass das Oberflächen-/Volumenverhältnis eine Funktion des Volumens der Substratkammer ist.

15. Einrichtung nach einem der Ansprüche 10 bis 14, dadurch gekennzeichnet, dass der Körper (2) einen der der Höhe der Wasservorratskammer (6) entsprechenden unteren und einen nach oben anschliessenden, der Höhe der Substratkammer (5) entsprechenden oberen Abschnitt aufweist, und dass er im unteren Abschnitt, nahe dem oberen Abschnitt, eine Belüftungsöffnung (15) aufweist.

16. Einrichtung nach Anspruch 15, dadurch gekennzeichnet, dass der Körper ein Hohlprofil aufweist, und dass die Belüftungsöffnung (15) die Körperaussenseite mit der nach oben offenen Innenseite des Körpers (2) verbindet.
